Europäisches Patentamt

European Patent Office

Office européen des brevets

(19)

(11) **EP 1 192 543 B1**

(12) **EUROPÄISCHE PATENTSCHRIFT**

(45) Veröffentlichungstag und Bekanntmachung des Hinweises auf die Patenterteilung:
**13.11.2002 Patentblatt 2002/46**

(21) Anmeldenummer: **00947766.2**

(22) Anmeldetag: **26.05.2000**

(51) Int Cl.⁷: **G06F 11/00**

(86) Internationale Anmeldenummer:
**PCT/DE00/01717**

(87) Internationale Veröffentlichungsnummer:
**WO 00/073903 (07.12.2000 Gazette 2000/49)**

(54) **VERFAHREN UND ANORDNUNG ZUR ERMITTLUNG EINES FEHLERBAUMS EINES TECHNISCHEN SYSTEMS, COMPUTERPROGRAMM-ERZEUGNIS UND COMPUTERLESBARES SPEICHERMEDIUM DAFÜR**

METHOD AND SYSTEM FOR DETERMINING A FAULT TREE OF A TECHNICAL SYSTEM, COMPUTER PROGRAM PRODUCT AND A COMPUTER READABLE STORAGE MEDIUM THEREFOR

PROCEDE ET SYSTEME POUR DETERMINER L'ARBORESCENCE DE DEFAILLANCES D'UN SYSTEME TECHNIQUE, PRODUIT DE PROGRAMME INFORMATIQUE ET SUPPORT D'INFORMATION LISIBLE PAR ORDINATEUR ASSOCIE

(84) Benannte Vertragsstaaten:
**DE FR GB**

(30) Priorität: **02.06.1999 DE 19925424**

(43) Veröffentlichungstag der Anmeldung:
**03.04.2002 Patentblatt 2002/14**

(73) Patentinhaber: **SIEMENS AKTIENGESELLSCHAFT 80333 München (DE)**

(72) Erfinder:
• **LIGGESMEYER, Peter D-85540 Haar (DE)**
• **MÄCKEL, Oliver D-81929 München (DE)**
• **RETTELBACH, Michael D-91056 Erlangen (DE)**
• **ROTHFELDER, Martin D-80639 München (DE)**

(56) Entgegenhaltungen:
• **DECKERS J ET AL: "FMEA und Fehlerbaumanalyse im Verbund nutzen" QUALITAET UND ZUVERLAESSIGKEIT, JAN. 1994, GERMANY, Bd. 39, Nr. 1, Seiten 47-50, XP000965449 ISSN: 0720-1214**
• **"DIN 25424-1: FEHLERBAUMANALYSE; METHODE UND BILDZEICHEN" DEUTSCHE NORM, September 1981 (1981-09), Seiten 1-8, XP000900840 in der Anmeldung erwähnt**
• **FOURNIER E ET AL: "Probabilistic reliability study of an automatic welding unit" MOYENS D'AUTOMATISATION DANS LES INDUSTRIES MANUFACTURIERES: CONVENTION AUTOMATIQUE PRODUCTIQUE 1986 (AUTOMATION IN MANUFACTURING INDISTRY: AUTOMATIC PRODUCTION CONFERENCE 1986), PARIS, FRANCE, 28-30 MAY 1986, Seiten 186-190, XP000964880 May 1986, Paris, France, GIIPRA, France**
• **KOCZA G ET AL: "Integrated reliability analysis system (IRAS)" QUALITY AND RELIABILITY ENGINEERING INTERNATIONAL, SEPT.-OCT. 1996, WILEY, UK, Bd. 12, Nr. 5, Seiten 371-381, XP000964646 ISSN: 0748-8017**
• **LEVESON N G ET AL: "SAFETY VERIFICATION OF ADA PROGRAMS USING SOFTWARE FAULT TREES" IEEE SOFTWARE,US,IEEE COMPUTER SOCIETY. LOS ALAMITOS, Bd. 8, Nr. 4, 1. Juli 1991 (1991-07-01), Seiten 48-59, XP000290816 ISSN: 0740-7459 in der Anmeldung erwähnt**
• **'Ausfalleffektanalyse (Fehler-Möglichkeits-und Einfluss-Analyse) Deutsche Norm' DIN 25448 Mai 1990, Seiten 1 - 8, XP000972272**

**Beschreibung**

Die Erfindung betrifft ein Verfahren, eine Anordnung, ein Computerprogramm-Erzeugnis sowie ein computerlesbares Speichermedium zur Ermittlung eines Fehlerbaums eines technischen Systems.

Ein solches Verfahren und eine solche Anordnung sind aus [1] bekannt.

Aus [1] ist bekannt, einen Fehlerbaum für ein Computerprogramm rechnergestützt zu ermitteln. Für das Computerprogramm wird eine Kontrollflußbeschreibung in Form eines Kontrollflußgraphen ermittelt. Für verschiedene Programmelemente des Computerprogramms wird unter Verwendung einer gespeicherten Fehlerbeschreibung, die jeweils einem gespeicherten Referenzelement zugeordnet ist, eine Elementenfehlerbeschreibung ermittelt. Mit der Fehlerbeschreibung eines Referenzelements werden mögliche Fehler des jeweiligen Referenzelements beschrieben. Aus den Elementenfehlerbeschreibungen in Form von Elementenfehlerbäumen wird der Fehlerbaum unter Berücksichtigung des Kontrollflußgraphen ermittelt.

Das Verfahren und die Anordnung aus [1] weisen insbesondere folgende Nachteile auf. Der ermittelte Fehlerbaum ist hinsichtlich der untersuchten Fehler und deren Ursachen unvollständig und damit unzuverlässig. Somit ist diese Vorgehensweise für sicherheitskritische Anwendungen im Rahmen der Fehlerbaumgenerierung nicht sinnvoll einsetzbar. Auch sind die einzelnen Fehlerbäume, die den Referenzelementen zugeordnet sind, unvollständig und damit unzuverlässig.

Aus [2] sind Grundlagen über einen Fehlerbaum bekannt. Unter einem Fehlerbaum ist, wie in [2] beschrieben, eine Struktur zu verstehen, die logische Zusammenhänge zwischen Eingangsgrößen des Fehlerbaums beschreibt, welche Eingangsgrößen zu einem vorgegebenen und erwünschten Ergebnis führen.

Ferner sind aus [3] verschiedene Verfahren zur Fehlerbaumanalyse bekannt.

Aus [4] sind ferner Grundlagen über eine sogenannte Ausfalleffektanalyse (Failure Modes, Effects [and Criticality] Analysis, FME[C]A) für ein technisches System bekannt. Ziel der Ausfalleffektanalyse ist das Erkennen von Risiken und Problembereichen in einem technischen System, das Identifizierer von Fehlerpotentialen, die Quantifizierung von Risiken sowie die Senkung von Fehlleistungsaufwand. Anschaulich ist die Ausfalleffektanalyse ein Verfahren zur Aufdeckung von Fehlern in der Hardware- und Software-Design-Entwicklungsphase. Es werden manuell Fehler, denen ein technisches System unterliegen kann, aufgelistet sowie Auswirkungen des jeweils auftretenden Fehlers bestimmt, üblicherweise einschließlich des möglicherweise aufgrund des Fehlers entstehenden Schadens. Ferner werden im Rahmen der Ausfalleffektanalyse mögliche Maßnahmen zur Vermeidung des jeweiligen Fehlers aufgezeigt. Eine Ausfalleffektanalyse eignet sich insbesondere zur Dokumentation und zum Transfer von Fachwissen zum Beispiel in Dienstleistungsbereichen zur Wartung eines technischen Systems. Es wird zwischen Konstruktions-Ausfalleffektanalyse und Prozeß-Ausfalleffektanalyse unterschieden. Bei der Konstruktions-Ausfalleffektanalyse werden einzelne Komponenten des technischen Systems hinsichtlich ihres Fehlverhaltens untersucht. Die Prozeß-Ausfalleffektanalyse hat den Entwicklungs- und Herstellungsprozeß eines technischen Systems zum Inhalt. Werden bei der Ausfalleffektanalyse nicht nur die einzelnen Komponenten des technischen Systems, sondern die Zusammenhänge der Fehlfunktionen der Komponenten im gesamten System untersucht, so wird die Ausfalleffektanalyse als System-Ausfalleffektanalyse bezeichnet. Die Prozeß-Ausfalleffektanalyse reicht gegebenenfalls in die System-Ausfalleffektanalyse hinein für den Fall, daß Fehlerfolgen des Fertigungsprozesses als Fehlerursachen in der System-Ausfalleffektanalyse auftreten (zum Beispiel Scheuern von Leitungen an beweglichen Teilen aufgrund fehlender Kabelbinder).

Die System-Ausfalleffektanalyse erlaubt aus den Ursache-Folge-Zusammenhängen der Komponenten des technischen Systems Fehlerketten aufzubauen, die in Form von Fehlernetzen dargestellt werden können.

Zur Durchführung einer System-Ausfalleffektanalyse werden üblicherweise folgende Schritte durchgeführt:

1. Systemkomponenten und Systemstruktur festlegen.

Das zu untersuchende System wird in seine Komponenten zerlegt. Die Komponenten werden wiederum in Unterkomponenten zerlegt, wodurch sich eine hierarchische Beziehung zwischen den einzelnen Komponenten ergibt, durch die jeweils angegeben ist, aus welchen Unterkomponenten eine Komponente des technischen Systems besteht. Die Komponenten des technischen Systems werden auch als Strukturelemente des technischen Systems bezeichnet. Auf Basis der Beziehungen zwischen den Komponenten wird ein Strukturbaum ermittelt.

2. Funktionen der Komponenten festlegen

Für jede in der Systemstruktur festgelegte Komponente wird deren Funktion beschrieben. Dabei stellt die Funktion einer Unterkomponente eine Teilfunktion der jeweils übergeordneten Komponente dar.

3. Fehleranalyse durchführen

Jeder Funktion einer Komponente werden entsprechende Fehlfunktionen zugeordnet, die bei der Komponente möglicherweise auftretende Fehler beschreiben. Die Fehlerfolgen sind dann in der jeweils übergeordneten Komponente als Fehlfunktion zu finden. Die Fehlerursachen einer Komponente sind als Fehlfunktionen in den Unterkomponenten aufgeführt.

4. Risikobewertung

Innerhalb der Ausfalleffektanalyse wird ein Risiko eines Fehlers durch eine Risikoprioritätszahl (RPZ) ausgedrückt.

$$RPZ = B \times A \times E,$$

wobei mit

- B eine Bedeutung des Fehlers bezeichnet wird, wobei üblicherweise ein Intervall von [1, 10] verwendet wird (mit einem Wert 1 wird ein unbedeutender Fehler bezeichnet und mit einem Wert 10 ein sehr bedeutender Fehler hinsichtlich eines vorgegebenen Kriteriums);
- A eine Auftrittshäufigkeit des Fehlers bezeichnet wird, wiederum in einem Intervall von [1, 10] wobei mit einem Wert 1 eine sehr geringe und mit einem Wert 10 eine sehr große Auftrittshäufigkeit bezeichnet wird;
- E eine Entdeckungswahrscheinlichkeit des Fehlers bezeichnet wird, die einen Wert zwischen [1, 10] annehmen kann,

wobei ein Wert 1 angibt, daß der Fehler immer entdeckt wird und mit einem Wert 10 angegeben wird, daß der Fehler in der Regel unentdeckt bleibt.

1. Verbesserung des Systems

Auf der Grundlage der Auswertung der RPZ sollten Veränderungen des technischen Systems vorgenommen werden.

Zur rechnergestützten Umsetzung der Ausfalleffektanalyse ist aus [5] ein Computerprogramm bekannt, das im weiteren als IQ-FMEA bezeichnet wird. IQ-FMEA enthält sowohl einen Struktur-Editor als auch einen Funktions-Editor und einen Fehleranalyse-Editor. Mit Hilfe dieser Editoren wird eine hierarchische Struktur des technischen Systems beschrieben. Sie umfaßt die Komponenten sowie deren Funktionen und Fehlfunktionen. Ferner ist in IQ-FMEA ein sogenannter Formblatt-Editor enthalten, mit dem es möglich ist, mögliche Fehler, Fehlerursachen, Fehlerfolgen sowie Vermeidungsmaßnahmen für die jeweilige Komponente des technischen Systems zu dokumentieren.

Nachteilig an der manuell erstellten Ausfalleffektanalyse sowie auch einer möglichen manuellen Erstellung eines Fehlerbaums ist insbesondere die Unzuverlässigkeit der Fehlerbeschreibung, die sich aus der Ausfalleffektanalyse bzw. der manuellen Erstellung des Fehlerbaums ergibt. Dies führt insbesondere bei sicherheitskritischen technischen Systemen zu einem nicht tolerierbaren Risiko in der Bewertung möglicher Fehler, die in dem technischen System auftreten können.

Aus [6] ist ein Verfahren zur Ermittlung einer Fehlerbaums eines Systems auf der Basis einer Ausfalleffektanalyte (FMEA) bekannt. Bei diesem Verfahren werden eine Ausfalleffektanalyse und eine Fehlerbaumanalyse miteinander kombiniert und zusammen durchgeführt. In [6] ist kein Hinweis auf die Engänzung der Fehlerbeschreibung um Abhängigkeiten von Fehlern untereinander und die Ergänzung um Fehlerauftrittshäufigkeiten zu finden.

Somit liegt der Erfindung das Problem zugrunde, einen Fehlerbaum eines technischen Systems unter Einsatz eines Computers zu ermitteln, die gegenüber dem bekannten Verfahren eine verläßlichere Fehlerbeschreibung des technischen Systems gewährleistet.

Das Problem wird durch das Verfahren, die Anordnung, das Computerprogramm-Erzeugnis sowie das computerlesbare Speichermedium mit den Merkmalen gemäß den unabhängigen Patentansprüchen gelöst.

Ein durch einen Computer ausgeführtes Verfahren zur Ermittlung eines Fehlerbaums eines technischen Systems geht von einer Fehlerbeschreibung aus, mit der Fehler, die in dem technischen System auftreten können, beschrieben werden. Die Fehlerbeschreibung umfaßt Daten, die mittels einer Ausfalleffektanalyse bestimmt worden sind. Die Fehlerbeschreibung wird mit Informationen hinsichtlich der Abhängigkeit möglicher Fehler voneinander und deren Auftrittshäufigkeit erweitert. Aus der erweiterten Fehlerbeschreibung wird für ein vorgegebenes Fehlerereignis der Fehlerbaum, mit dem die Abhängigkeiten möglicher Fehler beschrieben werden, die zu dem Fehlerereignis führen können, und die Auftrittshäufigkeit des Fehlerereignisses ermittelt.

Eine Anordnung zur Ermittlung eines Fehlerbaums eines technischen Systems weist einen Prozessor auf, der derart eingerichtet ist, daß folgende Schritte durchführbar sind:

a) Fehler, die in dem technischen System auftreten können, werden mit einer Fehlerbeschreibung beschrieben,
b) die Fehlerbeschreibung umfaßt Daten, die mittels einer Ausfalleffektanalyse bestimmt worden sind,
c) die Fehlerbeschreibung wird mit Informationen hinsichtlich der Abhängigkeit möglicher Fehler voneinander und deren Auftrittshäufigkeit erweitert,
d) Aus der erweiterten Fehlerbeschreibung werden für ein vorgegebenes Fehlerereignis der Fehlerbaum, mit dem die Abhängigkeiten möglicher Fehler beschrieben werden, die zu dem Fehlerereignis führen können und die Auftrittshäufigkeit des Fehlerereignisses ermittelt.

Ein Computerprogramm-Erzeugnis umfaßt ein computerlesbares Speichermedium, auf dem ein Programm gespeichert ist, das es einem Computer ermöglicht, nachdem es in einen Speicher des Computers geladen worden ist, folgende Schritte durchzuführen zur Ermittlung eines Fehlerbaums eines technischen Systems:

a) Fehler, die in dem technischen System auftreten können, werden mit einer Fehlerbeschreibung beschrieben,
b) die Fehlerbeschreibung umfaßt Daten, die mittels einer Ausfalleffektanalyse bestimmt worden sind,
c) die Fehlerbeschreibung wird mit Informationen hinsichtlich der Abhängigkeit möglicher Fehler voneinander und deren Auftrittshäufigkeit erweitert,
d) Aus der erweiterten Fehlerbeschreibung werden für ein vorgegebenes Fehlerereignis der Fehlerbaum, mit dem die Abhängigkeiten möglicher Fehler beschrieben werden, die zu dem Fehlerereignis führen können und die Auftrittshäufigkeit des Fehlerereignisses ermittelt.

Auf einem computerlesbaren Speichermedium ist ein Programm gespeichert, das es einem Computer ermöglicht, nachdem es in einen Speicher des Computers geladen worden ist, folgende Schritte durchzuführen zur Ermittlung eines Fehlerbaums eines technischen Systems:

a) Fehler, die in dem technischen System auftreten können, werden mit einer Fehlerbeschreibung beschrieben,
b) die Fehlerbeschreibung umfaßt Daten, die mittels einer Ausfalleffektanalyse bestimmt worden sind,
c) die Fehlerbeschreibung wird mit Informationen hinsichtlich der Abhängigkeit möglicher Fehler voneinander und deren Auftrittshäufigkeit erweitert,
d) Aus der erweiterten Fehlerbeschreibung werden für ein vorgegebenes Fehlerereignis der Fehlerbaum, mit dem die Abhängigkeiten möglicher Fehler beschrieben werden, die zu dem Fehlerereignis führen können und die Auftrittshäufigkeit des Fehlerereignisses ermittelt.

Durch die Erfindung wird insbesondere der benötigte Rechenaufwand zur Erstellung eines Fehlerbaums reduziert sowie die Zuverlässigkeit des ermittelten Fehlerbaums für das technische System erhöht. Durch die Kombination der Ausfalleffektanalyse mit der standardisierten Darstellung einer Fehlerbeschreibung für ein technisches System in Form eines Fehlerbaums wird ein vereinfachtes, standardisiertes Verfahren zur Fehlerbaumanalyse zur Verfügung gestellt.

Ferner ist ein Vorteil der Erfindung darin zu sehen, daß eine einheitliche Datenbasis für die Ausfalleffektanalyse sowie zur Ermittlung des Fehlerbaums genutzt wird. Somit ist es nicht erforderlich, ein zusätzliches Modell über das technische System zur Ermittlung des Fehlerbaums zu erstellen. Ergebnisse aus der Ausfalleffektanalyse gemeinsam mit den ergänzenden Angaben, die zur erweiterten Fehlerbeschreibung genutzt werden, können nunmehr zur Ermittlung eines Fehlerbaums eingesetzt werden.

Dadurch, daß automatisiert aus Daten, die aus einer Ausfalleffektanalyse resultieren, ein Fehlerbaum zu einem vorgegebenen Ereignis ermittelt wird, können auch Änderungen innerhalb des technischen Systems sehr flexibel und einfach in dem jeweiligen Fehlerbaum berücksichtigt werden.

Bevorzugte Weiterbildungen der Erfindung ergeben sich aus den abhängigen Ansprüchen.

Die im weiteren beschriebenen Ausgestaltungen gelten sowohl für das Verfahren, die Anordnung, das Computerprogramm-Erzeugnis als auch für das computerlesbare Speichermedium.

Der Fehlerbaum kann ermittelt werden, indem ausgehend von dem Fehlerereignis alle möglichen Fehler, die zu dem Fehlerereignis führen können, in absteigender Hierarchietiefe der Fehlerbeschreibung ermittelt werden, bis für alle Fehler Elementarfehler ermittelt worden sind, die selbst nicht mehr von weiteren Fehlern verursacht werden können. Zu jedem Elementarfehler wird die Auftrittshäufigkeit des Elementarfehlers ermittelt. Auf der Grundlage der Auftrittshäufigkeiten wird die Auftrittshäufigkeit des Fehlerereignisses bestimmt.

Durch diese Vorgehensweise wird implizit eine Konsistenzprüfung der Ausfalleffektanalyse durchgeführt, da sich bei der oben beschriebenen Vorgehensweise automatisch Konsistenzfehler in der Ausfalleffektanalyse ergeben.

Die Erfindung eignet sich zum Einsatz im Rahmen der Fehleranalyse des technischen Systems.

Der Fehlerbaum wird in einer Ausgestaltung verändert hinsichtlich vorgebbarer Rahmenbedingungen. Dies kann durch Hinzufügen eines Ergänzungsfehlerbaums erfolgen.

Ein Ausführungsbeispiel der Erfindung ist in den Figuren dargestellt und wird im weiteren näher erläutert.

Es zeigen

Figur 1                                  eine Skizze eines Computers, mit dem das Verfahren gemäß dem Ausführungsbeispiel durchgeführt wird;

Figur 2                                  ein Ablaufdiagramm, in dem die einzelnen Verfahrensschritte des Ausführungsbeispiels dargestellt sind;

Figuren 3a, 3b und 3c     Darstellungen eines Formblatt-Editors des IQ-FMEA, in dem einzelne mögliche Fehler des technischen Systems gemäß dem Ausführungsbeispiel eingetragen sind;

Figur 4                                  eine Darstellung des Struktur-Editors, in dem die hierarchische Struktur der ermittelten Fehler gemäß der Ausfalleffektanalyse aus dem Ausführungsbeispiel dargestellt sind;

Figur 5                                  eine detaillierte Skizze, in der die einzelnen Verfahrensschritte des Ausführungsbeispiels dargestellt sind.

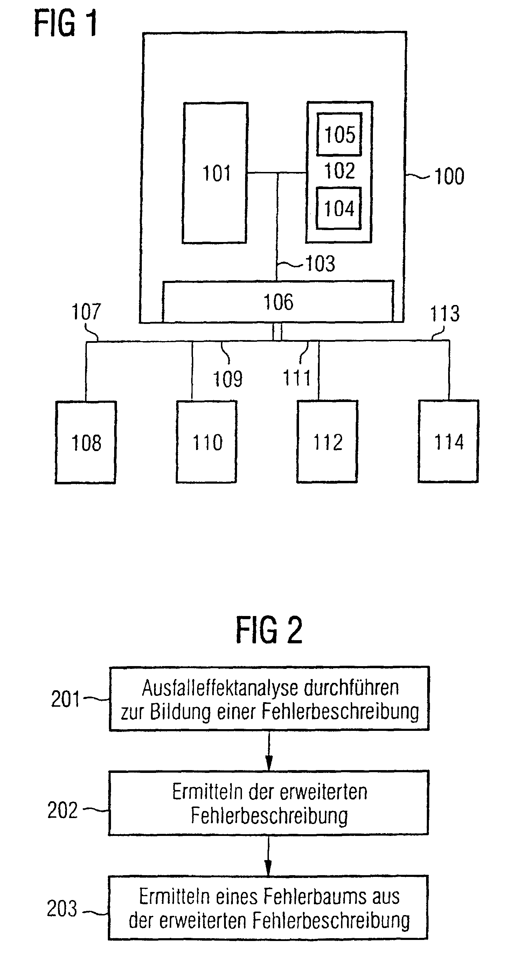

**Fig.1** zeigt einen Computer 100, mit dem das im weiteren beschriebene Verfahren durchgeführt wird.

Der Computer 100 weist einen Prozessor 101 auf, der über einen Bus 103 mit einem Speicher 102 verbunden ist. Mit dem Bus 103 ist ferner eine Eingangs-/Ausgangsschnittstelle 106 verbunden.

In dem Speicher 102 ist ein Computerprogramm 104 gespeichert, für das auf die im folgenden beschriebene Weise ein Fehlerbaum ermittelt wird. Ferner ist in dem Speicher 102 ein Programm 104 gespeichert, durch das im weiteren beschriebene Verfahren realisiert ist.

Mit der Eingangs-/Ausgangsschnittstelle 106 ist über eine erste Verbindung 107 eine Tastatur 108 verbunden. Über eine zweite Verbindung 109 ist die Eingangs-/Ausgangsschnittstelle 16 mit einer Computermaus 110 und über eine dritte Verbindung 111 ist die Eingangs-/Ausgangsschnittstelle 106 mit einem Bildschirm 112 verbunden, auf dem der ermittelte Fehlerbaum des technischen Systems dargestellt wird. Über eine vierte Verbindung 113 ist die Eingangs-/Ausgangsschnittstelle 106 mit einem externen Speichermedium 114 verbunden.

Das im weiteren beschriebene Ausführungsbeispiel beschreibt die Erfindung anhand eines FD-Thorax (ein medizinisches Diagnosegerät) als technisches System, insbesondere an der Komponente einer Nachlaufsteuerung für das FD-Thorax.

Für das technische System wird manuell eine Ausfalleffektanalyse durchgeführt. Ergebnis der Ausfalleffektanalyse ist eine Fehlerbeschreibung des technischen Systems FD-Thorax, mit der mögliche Fehler des Systems, deren möglichen Ursachen, deren mögliche Folgen sowie ein möglicher Schaden, der durch den jeweiligen Fehler verursacht werden kann, enthalten (Schritt 201).

Aus der Fehlerbeschreibung wird unter Hinzufügung von Information hinsichtlich der Abhängigkeit möglicher Fehler voneinander und deren Auftrittshäufigkeit eine erweiterte Fehlerbeschreibung ermittelt (Schritt 202).

Aus der erweiterten Fehlerbeschreibung wird für ein vorgegebenes Fehlerereignis ein Fehlerbaum ermittelt, mit dem die Abhängigkeit möglicher Fehler beschrieben werden, die zu dem Fehlerereignis führen können. Ferner wird die Auftrittshäufigkeit des vorgegebenen Fehlerereignisses ermittelt (Schritt 203).

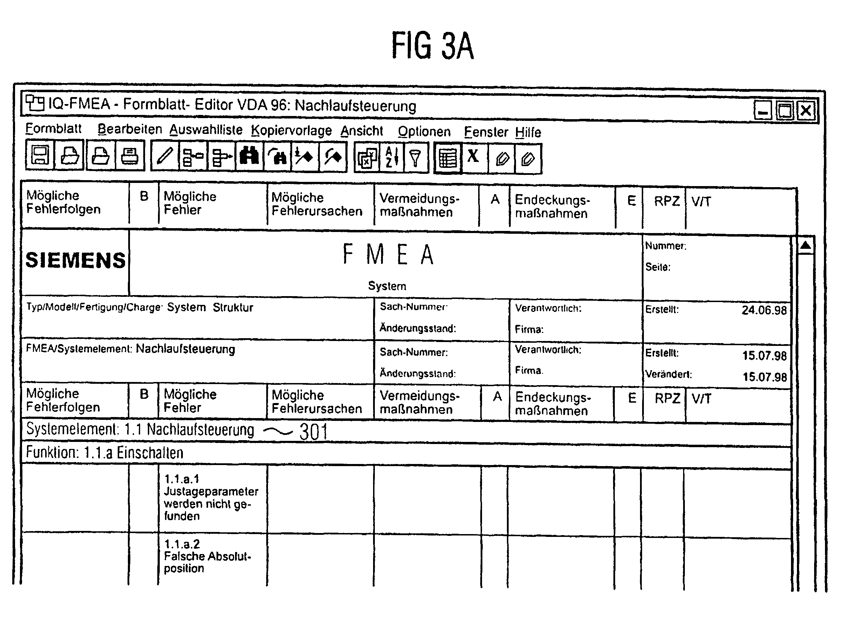

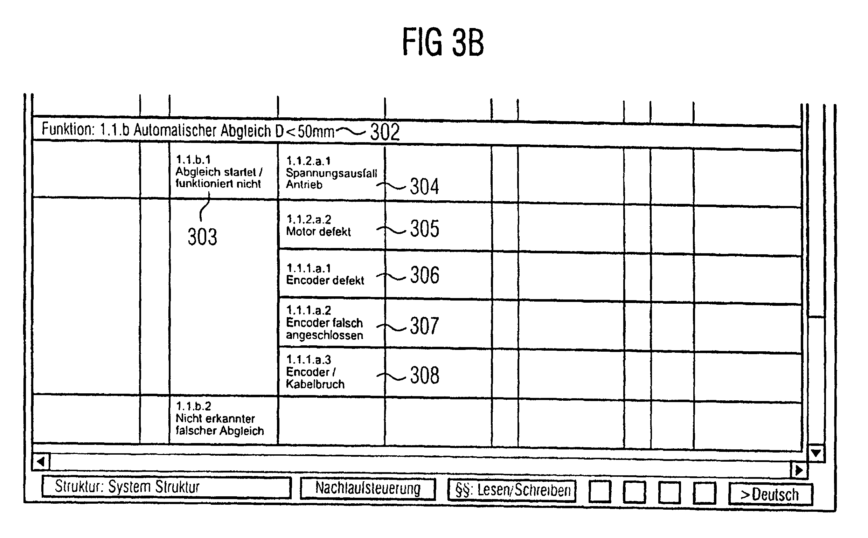

**Fig.3a** zeigt für die Komponente Nachlaufsteuerung des Gerätes FD-Thorax eine Darstellung eines Formblatt-Editors gemäß IQ-FMEA, in dem einzelne Fehlerfälle und Fehlerursachen hinsichtlich verschiedener Funktionen dargestellt sind.

Alle Komponenten des technischen Systems sowie Funktionen und Fehlfunktionen erhalten Nummern in folgenden Nomenklatur:

ne1[.ne2., .nek].af.nff

- ne1...k bezeichnet jeweils eine Nummer der Komponente in der Hierarchieebene 1...k des technischen Systems;
- mit af wird eine Nummer einer Funktion der jeweiligen Komponente bezeichnet;
- nff bezeichnet eine Nummer einer Fehlfunktion einer Funktion.

Der Inhalt des Formblatt-Editors in diesem Fall ist derart zu lesen, daß beispielsweise für die Komponente Nachlaufsteuerung für die Funktion eines automatischen Abgleichs D < 50 mm ein möglicher Fehler ist, daß der Abgleich nicht startet bzw. nicht funktioniert 303 (vgl. .1.1.b.1 in Spalte der möglichen Fehler in dem Formblatt aus Figur 3a).

Dieser mögliche Fehler kann verschiedene Fehlerursachen haben, beispielsweise einen Spannungsausfall am Antrieb 304, einen defekten Motor, 305, einen defekten Encoder 306, einen falsch angeschlossenen Encoder 307 oder einen Encoder/Kabelbruch 308.

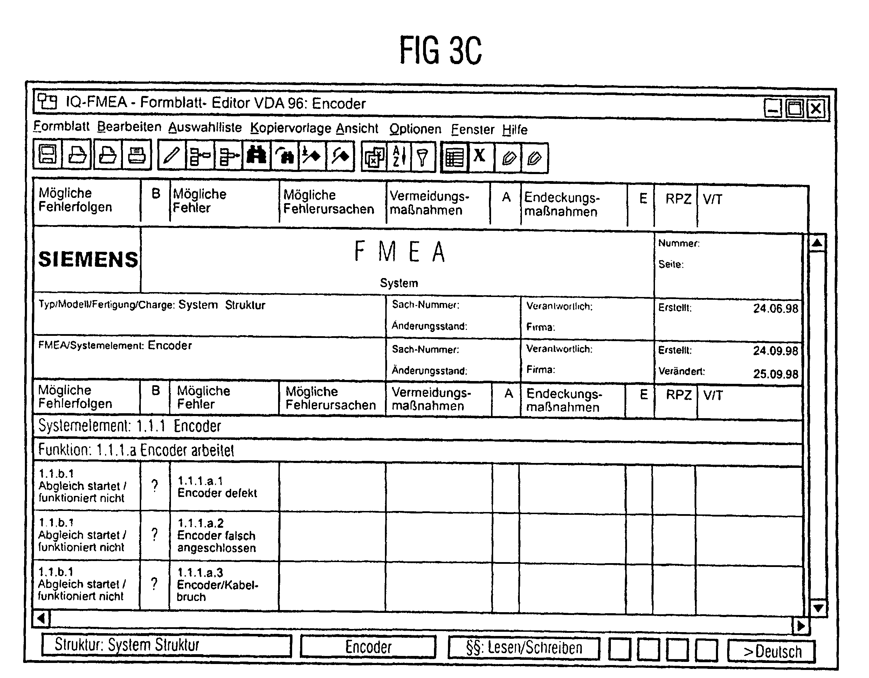

**Fig.3c** zeigt den Formblatt-Editor für die Unterkomponente Encoder innerhalb der Nachlaufsteuerung mit möglichen Fehlern des Encoders und möglichen Fehlerfolgen.

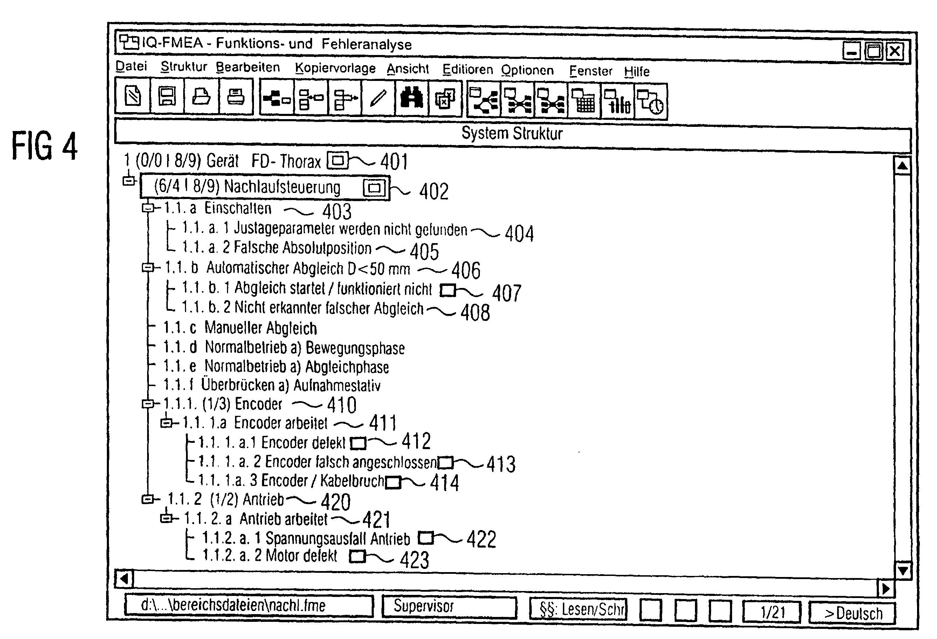

**Fig.4** zeigt eine aus der in dem Formblatt enthaltenen Fehlerbeschreibung abgeleitete hierarchische Struktur der Fehlerbeschreibung für das technische System FD-Thorax 401.

Betrachtet wird die Komponente Nachlaufsteuerung 402.

Ein Einschaltvorgang 403 kann fehlerhaft sein, wenn Justageparameter nicht gefunden werden 404, oder eine falsche Absolutposition verwendet wird 405.

Ein automatischer Abgleich D < 50 mm 406 ist fehlerhaft, wenn der Abgleich nicht funktioniert oder nicht startet 407 oder ein nicht erkannter falscher Abgleich erfolgt 408. Ein Encoder als Unterkomponente der Nachlaufsteuerung (vgl. 410) wird in seiner Funktion dadurch beschrieben, daß er arbeitet 411. Diese Funktion wird fehlerhaft ausgeführt, wenn der Encoder defekt ist 412, der Encoder falsch angeschlossen ist 413 oder wenn ein Encoder/Kabelbruch 414 vorliegt. Eine weitere Unterkomponente der Nachlaufsteuerung 402 ist ein Antrieb 420. Der Antrieb arbeitet (Funktion 421) nicht, wenn ein Spannungsausfall am Antrieb vorliegt 422 oder der Motor defekt ist 423.

Diese Strukturinformation als Fehlerbeschreibung des technischen Systems liegt als elektronisch gespeicherte Datei vor.

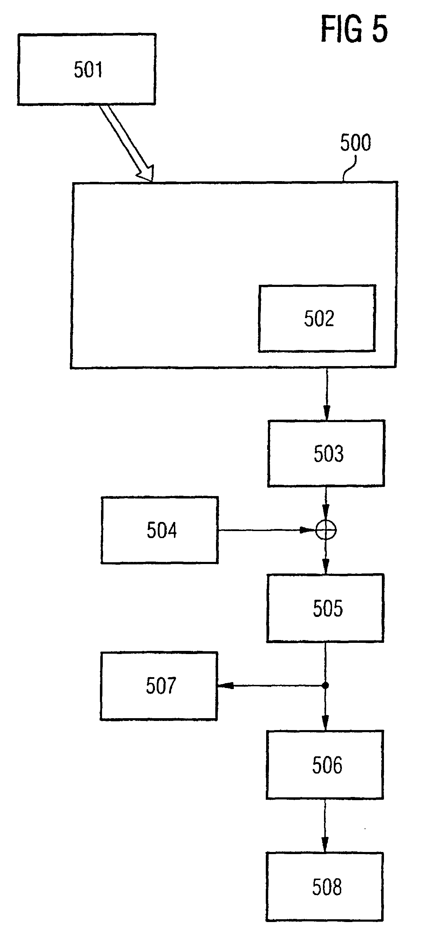

Dies ist auch in **Fig.5** symbolisch durch einen Eingabeschritt der Fehlerbeschreibung (Schritt 501) in das Programm IQ-FMEA 500 dargestellt. Ausgehend von dem Fehlernetz gemäß **Fig.4** (502) wird die Fehlerbeschreibung in einer Datenbank 503 gespeichert. Die Fehlerbeschreibung wird durch weitere Strukturinformation über das technische System bzw. deren mögliche Fehler erweitert (Schritt 504).

Für alle möglichen Elementarfehler, das heißt für alle Fehler, die nicht auf weitere Fehler innerhalb der Fehlerbeschreibung zurückführbar sind, werden Auftrittshäufigkeiten, das heißt Auftrittswahrscheinlichkeiten, bestimmt und dem jeweiligen Elementarfehler zugeordnet.

Ferner können weitere Abhängigkeiten zwischen Fehlern in der Fehlerbeschreibung hinzugefügt werden.

Ausgehend von der fehlererweiterten Fehlerbeschreibung 505 wird nun ein Fehlerbaum 506 ermittelt gemäß folgender Vorgehensweise.

Es wird ein Fehlerereignis vorgegeben, mit dem ein gewünschtes, zu untersuchendes fehlerhaftes Ereignis innerhalb des technischen Systems angegeben wird.

Zu dem vorgegebenen Fehlerereignis werden alle Fehlfunktionen der Komponenten des technischen Systems ermittelt, die zu diesem Fehlerereignis führen können.

In rekursiver Vorgehensweise werden für alle ermittelten Fehler jeweils die Fehlerursachen ermittelt, die zu dem jeweiligen Fehler führen. Aufgrund dieser rekursiven, hierarchisch in der logischen Betrachtungsweise des technischen Systems absteigender Folge wird der Fehlerbaum gebildet. Durch die definierten Abhängigkeiten gemäß der erweiterten Fehlerbeschreibung aus der Ausfalleffektanalyse werden die Fehler verknüpft. Dies wird solange fortgeführt, bis alle Fehler auf Elementenfehler zurückgeführt worden sind. Ausgehend von den Auftrittshäufigkeiten der Elementarfehler werden in hierarchisch entgegengesetzter Richtung hin zu dem Ereignis werden die einzelnen Auftrittswahrscheinlichkeiten derart verknüpft, daß eine Auftrittshäufigkeit des vorgegebenen Fehlerereignisses bestimmt wird.

Diese Vorgehensweise birgt insbesondere den Vorteil in sich, daß mögliche Inkonsistenzen innerhalb der Fehlerbeschreibung automatisch ermittelt werden, welche als Fehlermeldungen 507 ausgegeben werden. Diese können wiederum zur Verbesserung der Fehlerbeschreibung eingesetzt werden. Damit wird gewährleistet, daß der ermittelte Fehlerbaum auf einer konsistenten Fehlerbeschreibung aus der Ausfalleffektanalyse gebildet wird.

Auf den Fehlerbaum wird in einem weiteren Schritt (Schritt 508) eine Fehlerbaumanalyse durchgeführt.

Im weiteren werden einige Alternativen zu dem oben beschriebenen Ausführungsbeispiel dargestellt.

Der mit dem oben beschriebenen Verfahren erzeugte Fehlerbaum kann zu verschiedenen Zwecken eingesetzt werden:

- Beschreibung der Fehlererzeugung bzw. Fehlverhaltenspropogation durch einen Teil des technischen Systems im Rahmen einer Sicherheitsanalyse oder einer Zuverlässigkeitsanalyse des Systems,
- Analyse von verschiedenen Varianten des technischen Systems, beispielsweise im Rahmen einer Testfallgenerierung.

Der Fehlerbaum kann bei veränderter Struktur des technischen Systems durch einfaches Hinzufügen eines Ergänzungsfehlerbaums, der das Fehlverhalten der jeweiligen Komponente beschreibt, auf sehr einfache Weise erfolgen.

In diesem Dokument sind folgende Veröffentlichungen zitiert:

[1] N. Leveson, Safety verification of ADA-Programs using Software Fault Trees, IEEE Software, Seite 48-59, Juli 1991

[2] DIN 25424-1: Fehlerbaumanalysen; Methoden und Bildzeichen, September 1981

[3] DIN 25424-2: Fehlerbaumanalyse; Handrechenverfahren zur Auswertung eines Fehlerbaums, Berlin, Beuth Verlag GmbH, April 1990

[4] H.Zebedin, FMEA aus Sicht eines Motorenentwicklers, Qualität und Zuverlässigkeit, QZ 43, S. 826 ff., Carl Hanser Verlag, München, 1998

[5] Information zum Werkzeug IQ-FMEA, APIS Informationstechnologien GmbH, Jena, 1998

[6] D1 = Deckers J. und H. Schäbe : 'FMEA und Fehlerbaumanalyse im Verbund nutzen' Qualität und Zuverlässigkeit, Januar 1994, De, Bd. 39, Nr. 1, Seiten 47-50, XP000965449 ISSN: 0720-1214.

**Patentansprüche**

1. Verfahren zur Ermittlung eines Fehlerbaums eines technischen Systems, durch einen Computer,

   a) bei dem Fehler, die in dem technischen System auftreten können, mit einer Fehlerbeschreibung beschrieben werden,
   b) bei dem die Fehlerbeschreibung Daten umfaßt, die mittels einer Ausfalleffektanalyse (FMEA) bestimmt worden sind,
   c) bei dem die Fehlerbeschreibung mit Informationen hinsichtlich der Abhängigkeit möglicher Fehler voneinander und deren Auftrittshäufigkeit erweitert wird,
   d) bei dem aus der erweiterten Fehlerbeschreibung für ein vorgegebenes Fehlerereignis der Fehlerbaum, mit dem die Abhängigkeiten möglicher Fehler beschrieben werden, die zu dem Fehlerereignis führen können, und die Auftrittshäufigkeit des Fehlerereignisses ermittelt werden.

2. Verfahren nach Anspruch 1,
   bei dem der Fehlerbaum aus der erweiterten Fehlerbeschreibung für das Fehlerereignis auf folgende Weise ermittelt wird:

   • ausgehend von dem Fehlerereignis werden alle möglichen Fehler, die zu dem Fehlerereignis führen können, in absteigender Hierachietiefe der Fehlerbeschreibung ermittelt, bis für alle Fehler Elementarfehler ermittelt worden sind, die selbst nicht mehr von weiteren Fehlern verursacht werden können,
   • zu jedem Elementarfehler wird die Auftrittshäufigkeit des Elementarfehlers ermittelt,
   • auf der Grundlage der Auftrittshäufigkeiten wird die Auftrittshäufigkeit des Fehlerereignisses bestimmt.

3. Verfahren nach Anspruch 1 oder 2,
   eingesetzt zur Fehleranalyse des technischen Systems.

4. Verfahren nach einem der Ansprüche 1 bis 3,
   bei dem der Fehlerbaum verändert wird hinsichtlich vorgebbarer Rahmenbedingungen.

5. Verfahren nach Anspruch 4,
   bei dem die Veränderung durch Hinzufügen eines Ergänzungsfehlerbaums erfolgt.

6. Anordnung zur Ermittlung eines Fehlerbaums eines technischen Systems,
   mit einem Prozessor, der derart eingerichtet ist, daß folgende Schritte durchführbar sind:

   a) Fehler, die in dem technischen System auftreten können, werden mit einer Fehlerbeschreibung beschrieben,
   b) die Fehlerbeschreibung umfaßt Daten, die mittels einer Ausfalleffektanalyse (FMEA) bestimmt worden sind,
   c) die Fehlerbeschreibung wird mit Informationen hinsichtlich der Abhängigkeit möglicher Fehler voneinander und deren Auftrittshäufigkeit erweitert,
   d) aus der erweiterten Fehlerbeschreibung werden für ein vorgegebenes Fehlerereignis der Fehlerbaum, mit dem die Abhängigkeiten möglicher Fehler beschrieben werden, die zu dem Fehlerereignis führen können, und die Auftrittshäufigkeit des Fehlerereignisses ermittelt.

**7.** Anordnung nach Anspruch 6,
bei der der Prozessor derart eingerichtet ist, daß der Fehlerbaum aus der erweiterten Fehlerbeschreibung für das Fehlerereignis auf folgende Weise ermittelt wird:

- ausgehend von dem Fehlerereignis werden alle möglichen Fehler, die zu dem Fehlerereignis führen können, in absteigender Hierarchietiefe der Fehlerbeschreibung ermittelt, bis für alle Fehler Elementarfehler ermittelt worden sind, die selbst nicht mehr von weiteren Fehlern verursacht werden können,
- zu jedem Elementarfehler wird die Auftrittshäufigkeit des Elementarfehlers ermittelt,
- auf der Grundlage der Auftrittshäufigkeiten wird die Auftrittshäufigkeit des Fehlerereignisses bestimmt.

**8.** Anordnung nach Anspruch 6 oder 7,
eingesetzt zur Fehleranalyse des technischen Systems.

**9.** Anordnung nach einem der Ansprüche 6 bis 8,
bei der der Prozessor derart eingerichtet ist, daß der Fehlerbaum verändert wird hinsichtlich vorgebbarer Rahmenbedingungen.

**10.** Anordnung nach Anspruch 9,
bei der der Prozessor derart eingerichtet ist, daß die Veränderung durch Hinzufügen eines Ergänzungsfehlerbaums erfolgt.

**11.** Computerprogramm-Erzeugnis, das ein computerlesbares Speichermedium umfaßt, auf dem ein Programm gespeichert ist, das es einem Computer ermöglicht, nachdem es in einen Speicher des Computers geladen worden ist, folgende Schritte durchzuführen zur Ermittlung eines Fehlerbaums eines technischen Systems:

a) Fehler, die in dem technischen System auftreten können, werden mit einer Fehlerbeschreibung beschrieben,
b) die Fehlerbeschreibung umfaßt Daten, die mittels einer Ausfalleffektanalyse (FMEA) bestimmt worden sind,
c) die Fehlerbeschreibung wird mit Informationen hinsichtlich der Abhängigkeit möglicher Fehler voneinander und deren Auftrittshäufigkeit erweitert,
d) aus der erweiterten Fehlerbeschreibung werden für ein vorgegebenes Fehlerereignis der Fehlerbaum, mit dem die Abhängigkeiten möglicher Fehler beschrieben werden, die zu dem Fehlerereignis führen können, und die Auftrittshäufigkeit des Fehlerereignisses ermittelt.

**12.** Computerlesbares Speichermedium, auf dem ein Programm gespeichert ist, das es einem Computer ermöglicht, nachdem es in einen Speicher des Computers geladen worden ist, folgende Schritte durchzuführen zur Ermittlung eines Fehlerbaums eines technischen Systems:

a) Fehler, die in dem technischen System auftreten können, werden mit einer Fehlerbeschreibung beschrieben,
b) die Fehlerbeschreibung umfaßt Daten, die mittels einer Ausfalleffektanalyse (FMEA) bestimmt worden sind,
c) die Fehlerbeschreibung wird mit Informationen hinsichtlich der Abhängigkeit möglicher Fehler voneinander und deren Auftrittshäufigkeit erweitert,
d) aus der erweiterten Fehlerbeschreibung werden für ein vorgegebenes Fehlerereignis der Fehlerbaum, mit dem die Abhängigkeiten möglicher Fehler beschrieben werden, die zu dem Fehlerereignis führen können, und die Auftrittshäufigkeit des Fehlerereignisses ermittelt.

**Claims**

**1.** Method for ascertaining a fault tree for a technical system, using a computer,

a) in which faults which can occur in the technical system are described using a fault description,
b) in which the fault description comprises data which have been determined using failure modes and effects analysis (FMEA),
c) in which the fault description is extended by information regarding the dependency of possible faults on one another and the frequency of occurrence of said faults,
d) in which the extended fault description is used to ascertain, for a prescribed fault event, the fault tree describing the dependencies of possible faults which can lead to the fault event, and the frequency of occurrence of the fault event.

**2.** Method according to Claim 1,
in which the fault tree is ascertained from the extended fault description for the fault event in the following manner:

- the fault event is taken as a basis for ascertaining all the possible faults which can lead to the fault event on a descending hierarchical level of the fault description until elemental faults which themselves can no longer be caused by other faults have been ascertained for all faults,
- for each elemental fault, the frequency of occurrence of the elemental fault is ascertained,
- on the basis of the frequencies of occurrence, the frequency of occurrence of the fault event is determined.

**3.** Method according to Claim 1 or 2,
used for fault analysis in the technical system.

**4.** Method according to one of Claims 1 to 3,
in which the fault tree is altered in terms of prescribable boundary conditions.

**5.** Method according to Claim 4,
in which the alteration is made by adding a complementary fault tree.

**6.** Arrangement for ascertaining a fault tree for a technical system,
having a processor which is set up such that the following steps can be carried out:

a) faults which can occur in the technical system are described using a fault description,
b) the fault description comprises data which have been determined using failure modes and effects analysis (FMEA),
c) the fault description is extended by information regarding the dependency of possible faults on one another and the frequency of occurrence of said faults,
d) the extended fault description is used to ascertain, for a prescribed fault event, the fault tree describing the dependencies of possible faults which can lead to the fault event, and the frequency of occurrence of the fault event.

**7.** Arrangement according to Claim 6,
in which the processor is set up such that the fault tree is ascertained from the extended fault description for the fault event in the following manner:

- the fault event is taken as a basis for ascertaining all the possible faults which can lead to the fault event on a descending hierarchical level of the fault description until elemental faults which themselves can no longer be caused by other faults have been ascertained for all faults,
- for each elemental fault, the frequency of occurrence of the elemental fault is ascertained,
- on the basis of the frequencies of occurrence, the frequency of occurrence of the fault event is determined.

**8.** Arrangement according to Claim 6 or 7,
used for fault analysis in the technical system.

**9.** Arrangement according to one of Claims 6 to 8,
in which the processor is set up such that the fault tree is altered in terms of prescribable boundary conditions.

**10.** Arrangement according to Claim 9,
in which the processor is set up such that the alteration is made by adding a complementary fault tree.

**11.** Computer program product comprising a computer-readable storage medium on which a program is stored which, when it has been loaded into a memory in a computer, allows the computer to carry out the following steps for ascertaining a fault tree for a technical system:

a) faults which can occur in the technical system are described using a fault description,
b) the fault description comprises data which have been determined using failure modes and effects analysis (FMEA),
c) the fault description is extended by information regarding the dependency of possible faults on one another and the frequency of occurrence of said faults,
d) the extended fault description is used to ascertain, for a prescribed fault event, the fault tree describing the dependencies of possible faults which can lead to the fault event, and the frequency of occurrence of the fault event.

**12.** Computer-readable storage medium on which a program is stored which, when it has been loaded into a memory in a computer, allows the computer to carry out the following steps for ascertaining a fault tree for a technical system:

a) faults which can occur in the technical system are described using a fault description,
b) the fault description comprises data which have been determined using failure modes and effects analysis (FMEA),
c) the fault description is extended by information regarding the dependency of possible faults on one another and the frequency of occurrence of said faults,
d) the extended fault description is used to ascertain, for a prescribed fault event, the fault tree describing the dependencies of possible faults which can lead to the fault event, and the frequency of occurrence of the fault event.

**Revendications**

**1.** Procédé pour déterminer un arbre de défaillances d'un système technique par un ordinateur,

a) dans lequel les défaillances susceptibles d'apparaître dans le système technique sont décrites par une description des défaillances,
b) dans lequel la description des défaillances comprend des données qui ont été déterminées au moyen d'une analyse des effets de défaillances (FMEA),
c) dans lequel la description des défaillances est étendue par des informations relatives à l'interdépendance des défaillances possibles et à leur fréquence d'apparition,
d) dans lequel sont déterminés à partir de la description étendue des défaillances, pour un événement de défaillance prédéfini, l'arbre de défaillances utilisé pour décrire les interdépendances des défaillances possibles susceptibles d'entraîner l'événement de défaillance et la fréquence d'apparition de l'événement de défaillance.

**2.** Procédé selon la revendication 1, dans lequel l'arbre de défaillances est déterminé à partir de la description étendue des défaillances, pour l'événement de défaillance, de la manière suivante :

. en partant de l'événement de défaillance, toutes les défaillances possibles susceptibles d'entraîner l'événement de défaillance sont déterminées dans une hiérarchie descendante de la description des défaillances jusqu'à ce que, pour toutes les défaillances, des défaillances élémentaires aient été déterminées qui elles-mêmes ne peuvent plus être provoquées par d'autres défaillances,
. la fréquence d'apparition de la défaillance élémentaire est déterminée pour chaque défaillance élémentaire,
. la fréquence d'apparition de l'événement de défaillance est déterminée sur base des fréquences d'apparition.

**3.** Procédé selon la revendication 1 ou 2, mis en oeuvre pour l'analyse des défaillances du système technique.

**4.** Procédé selon l'une des revendications 1 à 3, dans lequel l'arbre de défaillances est modifié en ce qui concerne les conditions de base prédéfinissables.

**5.** Procédé selon la revendication 4, dans lequel la modification s'effectue par adjonction d'un arbre de défaillances complémentaire.

**6.** Système pour déterminer l'arbre de défaillances d'un système technique, comprenant un processeur configuré de manière à pouvoir effectuer les étapes suivantes :

a) les défaillances susceptibles d'apparaître dans le système technique sont décrites par une description des défaillances,

b) la description des défaillances comprend des données qui ont été déterminées au moyen d'une analyse des effets de défaillances (FMEA),

c) la description des défaillances est étendue par des informations relatives à l'interdépendance des défaillances possibles et à leur fréquence d'apparition,

d) à partir de la description étendue des défaillances, pour un événement de défaillance prédéfini, l'arbre de défaillances utilisé pour décrire les interdépendances des défaillances possibles susceptibles d'entraîner l'événement de défaillance et la fréquence d'apparition de l'événement de défaillance sont déterminés.

7. Système selon la revendication 6, dans lequel le processeur est configuré de manière à ce que l'arbre de défaillances soit déterminé à partir de la description étendue des défaillances, pour l'événement de défaillance, de la manière suivante:

. en partant de l'événement de défaillance, toutes les défaillances possibles susceptibles d'entraîner l'événement de défaillance sont déterminées dans une hiérarchie descendante de la description des défaillances jusqu'à ce que, pour toutes les défaillances, des défaillances élémentaires aient été déterminées qui elles-mêmes ne peuvent plus être provoquées par d'autres défaillances,

. la fréquence d'apparition de la défaillance élémentaire est déterminée pour chaque défaillance élémentaire,

. la fréquence d'apparition de l'événement de défaillance est déterminée sur base des fréquences d'apparition.

8. Système selon la revendication 6 ou 7, mis en oeuvre pour l'analyse des défaillances du système technique.

9. Système selon l'une des revendications 6 à 8, dans lequel le processeur est configuré de manière à ce que l'arbre de défaillances soit modifié en ce qui concerne les conditions de base prédéfinissables.

10. Système selon la revendication 9, dans lequel le processeur est configuré de manière à ce que la modification s'effectue par adjonction d'un arbre de défaillances complémentaire.

11. Produit de programme informatique, comprenant un support d'information lisible par ordinateur, sur lequel est enregistré un programme qui, une fois chargé dans la mémoire de l'ordinateur, permet audit ordinateur d'effectuer les étapes suivantes pour déterminer un arbre de défaillances d'un système technique :

a) les défaillances susceptibles d'apparaître dans le système technique sont décrites par une description des défaillances,

b) la description des défaillances comprend des données qui ont été déterminées au moyen d'une analyse des effets de défaillances (FMEA),

c) la description des défaillances est étendue par des informations relatives à l'interdépendance des défaillances possibles et à leur fréquence d'apparition,

d) à partir de la description étendue des défaillances, pour un événement de défaillance prédéfini, l'arbre de défaillances utilisé pour décrire les interdépendances des défaillances possibles susceptibles d'entraîner l'événement de défaillance et la fréquence d'apparition de l'événement de défaillance sont déterminés.

12. Support d'information lisible par ordinateur, sur lequel est enregistré un programme qui, une fois chargé dans la mémoire de l'ordinateur, permet audit ordinateur d'effectuer les étapes suivantes pour déterminer un arbre de défaillances d'un système technique :

a) les défaillances susceptibles d'apparaître dans le système technique sont décrites par une description des défaillances,

b) la description des défaillances comprend des données qui ont été déterminées au moyen d'une analyse des effets de défaillances (FMEA),

c) la description des défaillances est étendue par des informations relatives à l'interdépendance des défaillances possibles et à leur fréquence d'apparition,

d) à partir de la description étendue des défaillances, pour un événement de défaillance prédéfini, l'arbre de défaillances utilisé pour décrire les interdépendances des défaillances possibles susceptibles d'entraîner l'événement de défaillance et la fréquence d'apparition de l'événement de défaillance sont déterminés.

# FIG 1

```
                            ┌─────────┐
                            │  105    │
          ┌──────┐          ├─────────┤
          │      │          │  102    │── 100
          │ 101  │          ├─────────┤
          │      │          │  104    │
          └──────┘          └─────────┘
                    ~103
          ┌───────────────────────────┐
          │           106             │
          └───────────────────────────┘
   107                                    113
        109        111
   ┌──────┐  ┌──────┐  ┌──────┐  ┌──────┐
   │ 108  │  │ 110  │  │ 112  │  │ 114  │
   └──────┘  └──────┘  └──────┘  └──────┘
```

# FIG 2

```
         ┌─────────────────────────────────┐
  201 ───│  Ausfalleffektanalyse durchführen│
         │  zur Bildung einer Fehlerbeschreibung│
         └─────────────────────────────────┘
                        │
                        ▼
         ┌─────────────────────────────────┐
  202 ───│     Ermitteln der erweiterten    │
         │        Fehlerbeschreibung        │
         └─────────────────────────────────┘
                        │
                        ▼
         ┌─────────────────────────────────┐
  203 ───│  Ermitteln eines Fehlerbaums aus │
         │  der erweiterten Fehlerbeschreibung│
         └─────────────────────────────────┘
```

# FIG 3A

EP 1 192 543 B1

| | | | | | | | |
|---|---|---|---|---|---|---|---|
| 🖳 IQ-FMEA - Formblatt- Editor VDA 96: Nachlaufsteuerung | | | | | | □ ◻ ✕ | |

Formblatt  Bearbeiten  Auswahlliste  Kopiervorlage  Ansicht  Optionen  Fenster  Hilfe

| Mögliche Fehlerfolgen | B | Mögliche Fehler | Mögliche Fehlerursachen | Vermeidungs-maßnahmen | A | Endeckungs-maßnahmen | E | RPZ | V/T |
|---|---|---|---|---|---|---|---|---|---|
| **SIEMENS** | | F M E A <br> System | | | | | Nummer: <br> Seite: | | ▲ |
| Typ/Modell/Fertigung/Charge· System  Struktur | | | | Sach-Nummer· <br> Änderungsstand: | Verantwortlich: <br> Firma: | | Erstellt: | 24.06.98 | |
| FMEA/Systemelement: Nachlaufsteuerung | | | | Sach-Nummer: <br> Änderungsstand: | Verantwortlich: <br> Firma. | | Erstellt: <br> Verändert: | 15.07.98 <br> 15.07.98 | |
| Mögliche Fehlerfolgen | B | Mögliche Fehler | Mögliche Fehlerursachen | Vermeidungs-maßnahmen | A | Endeckungs-maßnahmen | E | RPZ | V/T |
| Systemelement: 1.1 Nachlaufsteuerung 〜 301 | | | | | | | | | |
| Funktion: 1.1.a Einschalten | | | | | | | | | |
| | | 1.1.a.1 Justageparameter werden nicht ge-funden | | | | | | | |
| | | 1.1.a.2 Falsche Absolut-position | | | | | | | |

# FIG 3B

| Funktion: 1.1.b Automatischer Abgleich D<50mm ~ 302 | | | | | | | | | |
|---|---|---|---|---|---|---|---|---|---|
| | 1.1.b.1<br>Abgleich startet /<br>funktioniert nicht<br><br>303 | 1.1.2.a.1<br>Spannungsausfall<br>Antrieb ~ 304 | | | | | | | |
| | | 1.1.2.a.2<br>Motor defekt ~ 305 | | | | | | | |
| | | 1.1.1.a.1<br>Encoder defekt ~ 306 | | | | | | | |
| | | 1.1.1.a.2<br>Encoder falsch<br>angeschlossen ~ 307 | | | | | | | |
| | | 1.1.1.a.3<br>Encoder /<br>Kabelbruch ~ 308 | | | | | | | |
| | 1.1.b.2<br>Nicht erkannter<br>falscher Abgleich | | | | | | | | |

| Struktur: System Struktur | Nachlaufsteuerung | §§: Lesen/Schreiben | ☐ ☐ ☐ ☐ | >Deutsch |
|---|---|---|---|---|

# FIG 3C

IQ-FMEA - Formblatt- Editor VDA 96: Encoder  ☐ ☐ ☒

Formblatt  Bearbeiten  Auswahlliste  Kopiervorlage  Ansicht  Optionen  Fenster  Hilfe

| Mögliche Fehlerfolgen | B | Mögliche Fehler | Mögliche Fehlerursachen | Vermeidungs-maßnahmen | A | Endeckungs-maßnahmen | E | RPZ | V/T |
|---|---|---|---|---|---|---|---|---|---|

| SIEMENS | F M E A | Nummer: |
|---|---|---|
| | System | Seite: |

| Typ/Modell/Fertigung/Charge: System Struktur | Sach-Nummer: | Verantwortlich: | Erstellt: | 24.06.98 |
|---|---|---|---|---|
| | Änderungsstand: | Firma: | | |

| FMEA/Systemelement: Encoder | Sach-Nummer: | Verantwortlich: | Erstellt: | 24.09.98 |
|---|---|---|---|---|
| | Änderungsstand: | Firma: | Verändert: | 25.09.98 |

| Mögliche Fehlerfolgen | B | Mögliche Fehler | Mögliche Fehlerursachen | Vermeidungs-maßnahmen | A | Endeckungs-maßnahmen | E | RPZ | V/T |
|---|---|---|---|---|---|---|---|---|---|
| Systemelement: 1.1.1 Encoder | | | | | | | | | |
| Funktion: 1.1.1.a Encoder arbeitet | | | | | | | | | |
| 1.1.b.1 Abgleich startet / funktioniert nicht | ? | 1.1.1.a.1 Encoder defekt | | | | | | | |
| 1.1.b.1 Abgleich startet / funktioniert nicht | ? | 1.1.1.a.2 Encoder falsch angeschlossen | | | | | | | |
| 1.1.b.1 Abgleich startet / funktioniert nicht | ? | 1.1.1.a.3 Encoder/Kabel-bruch | | | | | | | |

| Struktur: System Struktur | Encoder | §§: Lesen/Schreiben | ☐ ☐ ☐ ☐ | >Deutsch |
|---|---|---|---|---|

**FIG 4**

IQ-FMEA - Funktions- und Fehleranalyse

Datei  Struktur  Bearbeiten  Kopiervorlage  Ansicht  Editioren  Optionen  Fenster  Hilfe

System Struktur

1 (0/0 | 8/9) Gerät  FD- Thorax  ▣ ~ 401

(6/4 | 8/9) Nachlaufsteuerung  ▣ ~ 402

1.1. a  Einschalten  ~ 403
  ├ 1.1. a. 1 Justageparameter werden nicht gefunden ~ 404
  └ 1.1. a. 2 Falsche Absolutposition ~ 405

1.1. b  Automatischer Abgleich D<50 mm ~ 406
  ├ 1.1. b. 1 Abgleich startet / funktioniert nicht ☐ ~ 407
  └ 1.1. b. 2 Nicht erkannter falscher Abgleich ~ 408

├ 1.1. c  Manueller Abgleich
├ 1.1. d  Normalbetrieb a) Bewegungsphase
├ 1.1. e  Normalbetrieb a) Abgleichphase
├ 1.1. f  Überbrücken a) Aufnahmestativ

1.1.1. (1/3) Encoder ~ 410
  1.1. 1.a  Encoder arbeitet ~ 411
    ├ 1.1. 1. a.1 Encoder defekt ☐ ~ 412
    ├ 1.1. 1. a. 2 Encoder falsch angeschlossen ☐ ~ 413
    └ 1.1. 1.a. 3 Encoder / Kabelbruch ☐ ~ 414

1.1. 2  (1/2) Antrieb ~ 420
  1.1. 2. a  Antrieb arbeitet ~ 421
    ├ 1.1.2. a. 1 Spannungsausfall Antrieb ☐ ~ 422
    └ 1.1.2. a. 2 Motor defekt ☐ ~ 423

d:\...\bereichsdateien\nachl.fme     Supervisor     §§: Lesen/Schr  ☐ ☐ ☐  1/21  >Deutsch

EP 1 192 543 B1

# FIG 5